# EUROPEAN PATENT APPLICATION

(11) **EP 1 302 711 A1**
(43) Date of publication of application: **16.04.2003**
(21) Application number: 01308781.2
(22) Date of filing: 16.10.2001
(51) Int. Cl.: F16K 31/00, F16K 31/02

(54) **Valve**

(71) Applicant: Visteon Global Technologies, Inc., Dearborn, Michigan 48126-2490 (US)
(72) Inventor: Jones, William, Essex SS5 5HN (GB)
(74) Representative: McLean, Robert Andreas

(57) **Abstract**

The present invention relates to a valve (24) suitable for use in the fuel supply system of a diesel engine. The valve is capable of diverting an incoming supply of fuel to one of two possible outlets (44,46) depending upon the temperature of the fuel. The valve (24) comprises a chamber (48), an inlet (42) and two outlets (44,46). A movable valve member (50) is located within the chamber (48). The valve (24) also includes at least one resilient biasing means (56) and a shape memory alloy (SMA) component (58). The SMA component (58) has a transformation temperature and co-operates with the resilient biasing means (56) to bias the valve member (50) to a first position closing at least one outlet (44). The SMA component is in thermal contact with any liquid within the chamber (48) and as the temperature of the SMA component reaches the transformation temperature it changes size and biases the valve member (50) to a second position closing a different outlet (46).

## Description

The present invention relates to a valve that may be actuated by a temperature variation for directing a liquid flow. The valve is particularly intended for use as a recirculation valve within the fuel supply system for a vehicle having an internal combustion engine and is of especial relevance for diesel fuel supply systems and is also relevant to applications within the engine coolant circuit of an vehicle engine.

In diesel fuel supply systems it is useful, especially during start up at low environmental temperatures, to warm the fuel before it reaches a fuel pump in order to minimise the risk of wax formation and any pressure drops within the fuel supply system. In some applications, the heat energy gained by the fuel as it passes through a fuel pump is used to warm the feed to the fuel pump by partial recirculation of excess fuel into the feed. This facilitates starting and initial running of the engine. However, once an acceptable fuel temperature is reached the excess fuel is returned to the fuel tank as excessive fuel temperature within the fuel pump may lead to degradation of the fuel pump.

Such heated fuel recirculation has been achieved using a thermostatic diverting valve to feed some, all or none of the fuel leaving the fuel pump back into the feed to the fuel pump. Such thermostatic valves traditionally use bimetallic components that change configuration as their temperature changes. Such valves may cause high pressure drops across the valve at high fuel flow rates as the mechanical movement of a bimetallic component in response to a temperature change may not be sufficient to open large apertures. Valve actuation by such bimetallic valves may also be too slow for some applications and such valves are not capable of direct electronic control.

It is an object of the present invention to address some of the above issues.

Accordingly the invention provides a valve for controlling liquid flow in an internal combustion engine liquid circuit, the valve comprising a chamber, an inlet for allowing a liquid to enter the chamber, at least two outlets for allowing a liquid to leave said chamber and a valve member, the valve member being movable within said chamber in response to the condition of a shape memory alloy (SMA) component having a transformation temperature, the SMA component biasing the valve member to a first position, characterised in that the SMA component is in thermal contact with any liquid within the chamber and as the temperature of the SMA component reaches the transformation temperature the SMA component expands or contracts and biases the valve member to a second position.

A shape memory alloy (SMA) is a material with the property of returning to a previously defined shape or size when subjected to an appropriate thermal procedure. In many cases the appropriate thermal procedure is simply to raise or lower the temperature of the SMA past a transformation temperature at which the crystal structure of the alloy changes, changing the mechanical properties of the material. An example of a shape memory alloy is a binary Nickel-Titanium alloy, often referred to as Nitenol or Nitinol.

The SMA component of the valve may be made substantially of SMA only, or may include other materials that do not behave in the same way as an SMA, but do not substantially affect the function of the valve.

In a valve according to the invention the temperature of the SMA component is dependent, at least in part, upon the temperature of any liquid within the chamber. If the temperature of the liquid changes and the temperature of the SMA component passes the transformation temperature of the SMA, the mechanical properties of the SMA component change. This may cause the SMA component to extend or contract and cause the valve member to move. Preferably the SMA component is a spring. The spring is preferably a helical spring, but may be any other suitable spring made from SMA.

The extension or contraction of the SMA component may be due to the component expanding or contracting as the mechanical properties of the SMA change. It may also be a result of the elastic properties of the component changing and the component being expanded or contracted by the force of a co-operating resilient biasing means.

The SMA component may change configuration during transformation that the resultant movement of the valve member is sufficient to move the valve member from the first position to the second position, or vice versa. However, it is preferred that the valve includes a resilient biasing means that co-operates with the SMA component to bias the valve member to the first or second position and the valve will be described hereinafter with reference to this preferred embodiment.

The properties of the SMA component preferably change rapidly at a transformation temperature and the speed with which the valve may react is thus improved over a bimetallic valve that reacts gradually with a change in temperature. The sharp change in properties of the SMA component also allow a greater mechanical movement of the valve member at or around the transformation temperature and this enables larger ports to be opened than would be possible with a bimetallic valve. The use of larger outlet ports ensures that any pressure drop across the valve is not significant.

In a valve according to the invention the SMA component is in thermal contact with a liquid within the valve. As the liquid temperature within the valve changes, the temperature of the SMA component also changes. Thus the valve of the invention will actuate when the temperature of the liquid has warmed or cooled the SMA component such that it reaches the transformation temperature of the SMA. The exact composition of the SMA component will be selected such that the transformation temperature is substantially at a critical temperature at which it is desired that the valve should actuate. The exact composition of the SMA required for a given critical temperature may be found by trial and error or by searching available reference tables.

The SMA component preferably has a low thermal mass and narrow transformation temperature range so as to allow better control of the valve actuation point compared with a bimetallic valve. A low thermal mass means that the SMA component will be at substantially the same temperature as the liquid within the chamber unless there is an outside influence such as electric heating. Therefore the transformation temperature of the SMA should be substantially the same as the critical temperature at which actuation of the valve is required.

For convenience, the invention will be described with reference to a specific embodiment of a fuel recirculation valve for use in a vehicle fuel supply system. The valve has a housing with a generally cylindrical wall closed at each end by an endcap. A single inlet passes into the chamber through an endcap and two outlets pass through the cylindrical wall. The endcaps may be integrally formed with the housing, but for ease of manufacture at least one is preferably a separate component.

It is preferred that the valve includes a conventional helical spring to co-operate with the SMA component in biasing the valve member to the first or second positions. It is also preferable that the SMA component is a resilient biasing means, preferably a helical spring, as this may result in a larger movement of the valve member at the transformation temperature than if the SMA component was not a resilient biasing means.

It is further preferred that the resilient biasing means, in this case helical springs, be arranged in opposition with the valve member at an end of at least one. This allows the two biasing means to act upon one another. Both means may be compressed or extended from their natural dimensions, or one may be compressed and the other stretched.

As the SMA properties change at the transformation temperature the natural length and/or the elastic properties of the SMA spring change and the conventional spring will either compress the SMA spring or be compressed by the SMA spring and the valve member will move. Although it is preferred that helical springs are used to co-operate to move the valve member, it should be understood that any resiliently deformable means might be used, for example a leaf spring or other resiliently deformable component. A gas spring could also be used to co-operate with the SMA component to move the valve member.

Preferably the critical temperature at which the valve actuates is within the range 30°C to 70°C and is most preferably substantially 50°C for a fuel recirculation valve.

It is preferred that the valve member is slidably mounted within the chamber as this allows easy construction. However, the valve member could be hinged within the chamber such that the change in SMA spring properties caused the valve member to move from covering one outlet to the covering the other.

The valve member is preferably located between opposing springs with the springs located on opposite sides of the valve member and orientated towards the endcaps of the housing as this may facilitate manufacture. However, both springs may be on one side of the valve member and arranged generally concentrically or in parallel with one spring stretched and the other compressed.

The valve member may be a spool within the chamber which is slidable within the chamber under the influence the SMA component and other resilient biasing means to block one or the other of the two outlets and to open the other.

The valve member may be a cylindrical piston that fits within the chamber and has a width sufficient to cover one or other of the outlets to prevent liquid from leaving the chamber through that outlet.

There is preferably a vent aperture in the valve member through which liquid may pass within the chamber from one side of the valve member to an opposite side as this will prevent a hydraulic lock from forming and preventing the valve member from moving. The vent aperture also prevents pressure fluctuations in the inlet liquid from affecting the position of the valve member.

For some applications of this valve it is desirable that the valve can be actuated on a command from a user, from an electronic control device or by other means. The valve may include actuation means that can move the valve member on command. The valve includes electrical contacts arranged such that a current can be made to flow through the SMA component. The electrical current flowing through the component will heat the component due to the electrical resistance. This electrical heating heats the SMA component above the critical temperature and actuates the valve to a 'hot' position that would be associated with a liquid above the critical temperature within the valve.

In a diesel fuel supply system application, the ability to electronically control the valve to move the valve member to a position corresponding to warm fuel allows greater control of the engine fuel supply system during the warm-up period after starting the engine and also during the period following engine shut down.

Although the invention has been described with reference to a specific embodiment and for a specific purpose within the fuel supply system, it should be understood that the invention is not limited to that embodiment, or to that function. A valve according to the invention may for instance be used in the coolant circuit of an internal combustion engine.

The invention accordingly provides a valve for controlling liquid coolant flow in an internal combustion engine cooling circuit, the valve comprising a chamber, an inlet for allowing a liquid to enter the chamber, at least two outlets for allowing a liquid to leave said chamber and a valve member, the valve member being movable within said chamber in response to the condition of a shape memory alloy (SMA) component having a transformation temperature, the SMA component biasing the valve member to a first position, characterised in that the SMA component is in thermal contact with any liquid within the chamber and as the temperature of the SMA component reaches the transformation temperature the SMA component expands or contracts and biases the valve member to a second position.

In particular, for different applications there could be more than one inlet or more than two outlets from the chamber. The valve member may take a form not specifically disclosed above, but would perform a similar function. More than two resilient biasing means could be used and two or more SMA components could be used.

If two or more SMA components are used, each component could have a different transformation temperature and therefore allow more than two positions for the valve member. For instance two SMA springs could be used to resiliently bias the valve member in three different positions in three different temperature ranges.

The valve may be formed integrally with another part of the fuel supply system, for instance a fuel filter or filter head as this may reduce the distance along which fuel is piped.

The invention will now be further described, by way of example, with reference to the accompanying drawings, in which:
Figure 1 is a schematic diagram of a vehicle fuel supply system including a recirculation valve;
Figure 2 shows a cross-section of a valve according to the invention actuated by the temperature of the liquid within the valve; and
Figure 3 shows a cross-section of a second embodiment of a valve according to the invention actuated as in Figure 2, but also by an electrical command.

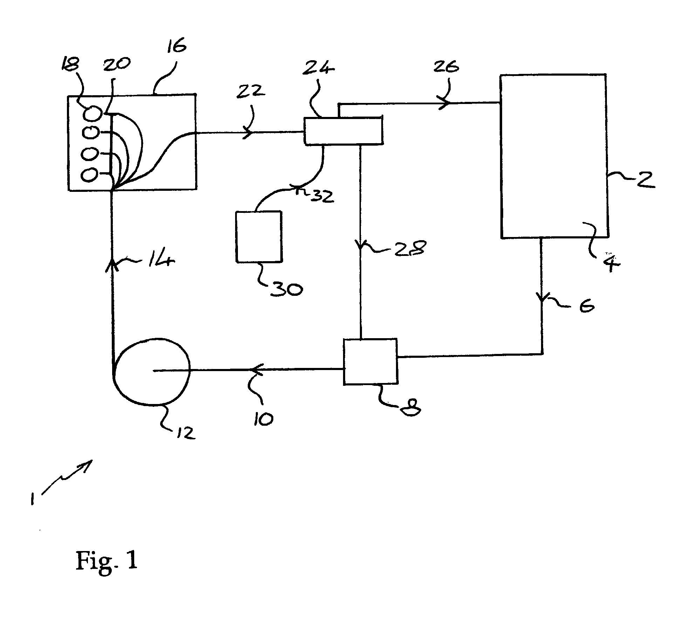

Figure 1 shows a fuel supply system 1 for a vehicle (not shown). The fuel supply system 1 comprises a fuel tank 2 for containing fuel 4, in this case diesel fuel. Fuel 4 is drawn from the tank 2 through a fuel line 6 to a fuel filter 8 by a fuel pump 12. In the fuel filter 8, any particulate matter in the fuel is trapped and retained so that it cannot create blockages downstream.

The mechanical work performed by the fuel pump 12 on the fuel 4 causes the fuel 4 to gain thermal energy. Starting from cold the fuel gains thermal energy and may increase in temperature up to about 100°C in an ambient temperature of about 38°C. At this point the thermal energy losses by convention and radiation are substantially equal to the thermal energy gained and the fuel temperature reaches a substantially steady state.

The high pressure fuel then passes 14 to an engine 16, in which some of the fuel 4 is injected into cylinders 18 through injectors 20.

Any fuel 4 in excess of that required by the engine 16 passes 22 to a valve 24. The valve 24 controls how much of the excess fuel is passed 26 back into the fuel tank 4 and how much is passed 28 back to the fuel filter 8. Fuel passed to the fuel filter 8 mixes with cold fuel from the fuel tank 2 and warms the fuel feed to the pump 12 and hence increases the temperature of the fuel reaching the injectors 20.

The valve 24 controls the direction of the fuel flow according to the temperature of the fuel passing through it, but may also be controlled by an electrical signal 32 from an Engine Control Unit 30.

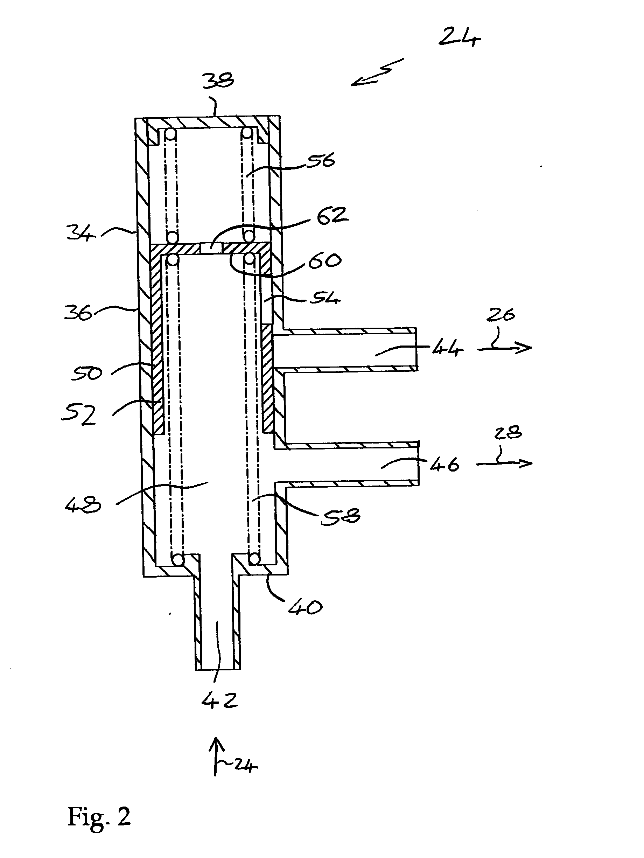

Figure 2 shows a cross section of a valve 24 according to the invention. The valve 24 has a housing 34 comprising a cylindrical wall 36 and endcaps 38,40 that seal each end of the housing 34. Endcap 40 is formed integrally with the wall 36 and endcap 38 is separate and is secured in place during assembly of the valve 24.

The valve 24 includes an inlet 42 through the endcap 40 and two outlets 44,46 through the wall 36. The inlet 42 and outlets 44,46 communicate with a chamber 48 within the valve 24.

Within the chamber 48 there is a valve member 50, in this case a spool slidable within the chamber. The valve member 50 is located between two helical springs 56,58. Spring 56 is a spring made from a conventional material such as stainless steel. Spring 58 is made from a shape memory alloy with a transformation temperature of about 50°C.

The valve member 50 is in the form of a spool 52 including a port 54, and an end portion 60 with which the springs 56,58 make contact. The end portion 60 includes a vent hole 62 to avoid hydraulic lock as the valve member 50 moves. In a first position as shown, the outlet 46 is open and outlet 44 is closed such that fuel passing through the valve 24 flows to the fuel filter 8. In a second position, the valve member 50 slides within the chamber 48 such that the aperture 54 is aligned with outlet 44 and the tube 52 covers the outlet 46 such that fuel passing through the valve 24 flows to the fuel tank 2.

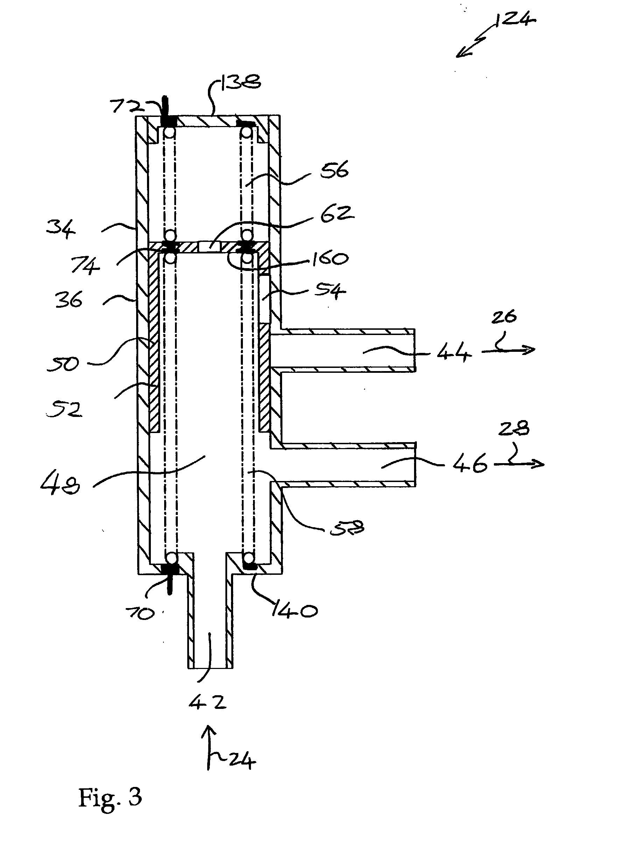

Figure 3 shows a further embodiment of a valve 124. The valve 124 is similar to the valve 24 of Figure 2, but the valve 124 may be actuated by an electrical signal.

The endcaps 138,140 and the end portion 160 of the valve member 50 include electrical contacts 70,72,74 respectively that make contact with one or more of the springs 56,58. If an electric current is passed between the electrical contacts 70 and 72, a current must pass through the SMA spring 58. The current flowing through the spring will heat it such that the temperature of the spring rises above the transformation temperature of the SMA spring 58 and this will cause the valve member 50 to move to the second position.

The invention thus provides a valve suitable for use in the fuel supply system for a diesel engine. The valve actuates at a critical temperature that is defined by the composition of the SMA used to construct the SMA component. The mechanical movement within the valve is sufficient to allow large ports to open such that the pressure drop through the apparatus is kept to an acceptable level. The ability to force the valve to a second position by using an electric signal facilitates fine control of the engine.

## Claims

1. A valve (24) for controlling liquid flow in an internal combustion engine liquid circuit, the valve comprising a chamber (48), an inlet (42) for allowing a liquid to enter the chamber (48), at least two outlets (44,46) for allowing a liquid to leave said chamber (48) and a valve member (50), the valve member (50) being movable within said chamber (48) in response to the condition of a shape memory alloy (SMA) component (58) having a transformation temperature, the SMA component (58) biasing the valve member to a first position, **characterised in that** the SMA component (58) is in thermal contact with any liquid within the chamber (48) and as the temperature of the SMA component (58) reaches the transformation temperature the SMA component (58) expands or contracts and biases the valve member (50) to a second position.

2. A valve as claimed in claim 1, in which the liquid circuit is a fuel flow circuit.

3. A valve as claimed in claim 1 or claim 2, in which the valve includes resilient biasing means (56) that co-operate with the SMA component (58) to bias the valve member (50) to the first or second position.

4. A valve as claimed in any preceding claim, in which the valve includes electrical contacts (70,72,74) arranged such that an electric current may flow through the SMA component (58) and cause heating of said component such that the temperature of the component rises above the transformation temperature.

5. A valve as claimed in any preceding claim in which the SMA component (58) is in the form of a helical spring.

6. A valve as claimed in any of claims 3 to 5, in which the resilient biasing means (56) is a non-SMA component in the form of a helical spring.

7. A valve as claimed in claim 5, in which the conventional spring (56) is arranged in opposition with the shape memory alloy component (58).

8. A valve as claimed in any preceding claim in which the valve member (50) is slidably mounted within the chamber (48) and the valve member (50) includes a vent aperture (62) allowing liquid to move within the chamber through the valve member to prevent a hydraulic lock from forming.

9. A fuel supply system (1) for an internal combustion engine (16), the fuel supply system (1) comprising a fuel circuit for passing fuel from a fuel tank via a fuel pump (12) to the engine (16) and for returning excess fuel via a recirculation passage to the fuel tank, the fuel supply circuit including a valve (24) as claimed in any preceding claim for directing returned excess fuel either to the fuel tank (2) via the recirculation passage or to the fuel pump (12).

10. A fuel supply system as claimed in claim 9, in which the fuel supply system includes a fuel filter (8) upstream of the fuel pump (12), and returned excess fuel directed back to the fuel pump (12) passes through the fuel filter (8) before reaching the pump.

11. A fuel supply system as claimed in any preceding claim, adapted to supply diesel fuel.

12. A vehicle equipped with a fuel supply system (1) as claimed in any of claims 9 to 11.

13. A valve as claimed in claim 1 wherein the liquid circuit is an internal combustion engine cooling circuit.
